# EUROPEAN PATENT APPLICATION

(11) **EP 4 821 626 A1**
(43) Date of publication of application: **14.10.2026**
(21) Application number: 26166499.9
(22) Date of filing: 20.03.2026
(51) Int. Cl.: B23K 9/095, B23K 9/32

(54) **SYSTEMS AND METHODS TO ADJUST PARAMETERS OF A ROBOTIC WELDING SYSTEM**

(30) Priority: 31.03.2025 US 202519096157
(71) Applicant: Illinois Tool Works Inc., Glenview IL 60025 (US)
(72) Inventor: MASSEY, Steven B., Glenview, 60025 (US); PAGANO, Kevin Gregory, Glenview, 60025 (US)
(74) Representative: HGF

(57) **Abstract**

Disclosed example robotic welding systems include: a robotic manipulator configured to move a welding-type torch according to a robotic welding program; a welding-type power source configured to supply welding-type power to the welding-type torch; an input device coupled to the robotic manipulator; and control circuitry configured to: control the welding-type power source to output the welding-type power to the welding-type torch according to one or more parameters during a welding-type operation; in response to receiving an input via the input device while the welding-type power source is outputting the welding-type power, adjust at least one of the one or more parameters based on the input; and control the welding-type power source to output the welding-type power to the welding-type torch based on the adjustment to the one or more parameters.

## Description

### FIELD OF THE DISCLOSURE

This disclosure relates generally to robotic welding and, more particularly, to systems and methods to adjust parameters of a robotic welding system.

### BACKGROUND

Robotic welding is often used to perform repetitive welding operations involving workpieces having a consistent configuration and series of welds to be performed. Collaborative robots are a type of robot which include features enabling use within a closer proximity to personnel than conventional robots.

### SUMMARY

Systems and methods to configure a robotic welding system are disclosed, substantially as illustrated by and described in connection with at least one of the figures, as set forth more completely in the claims.

### BRIEF DESCRIPTION OF THE DRAWINGS

FIG. 1 illustrates an example robotic welding system to perform welding, including a welding-type power supply and a robot control system, in accordance with aspects of this disclosure.
FIG. 2 is a block diagram of an example implementation of the welding-type power supply and the robot control system of FIG. 1.
FIG. 3 is a block diagram of another example implementation of the welding-type power supply and the robot control system of FIG. 1.
FIGS. 4A-4D illustrate an example collaborative robot including an example input device attached to the collaborative robot to adjust welding parameters according to different individual inputs and/or combinations of inputs.
FIG. 5 is a flowchart representative of example machine readable instructions which may be executed by the example robot control system of FIGS. 1, 2, and/or 3 to control a robotic welding system including adjusting welding parameters during a welding operation.

The figures are not necessarily to scale. Where appropriate, similar or identical reference numbers are used to refer to similar or identical components.

### DETAILED DESCRIPTION

For the purpose of promoting an understanding of the principles of this disclosure, reference will be now made to the examples illustrated in the drawings and specific language will be used to describe the same. It will nevertheless be understood that no limitation of the scope of the claims is intended by this disclosure. Modifications in the illustrated examples and such further applications of the principles of this disclosure as illustrated therein are contemplated as would typically occur to one skilled in the art to which this disclosure relates.

While advances in robotic welding using collaborative robots have improved the time involved in teaching positioning of the robotic welding torch, conventional robotic welding systems rely to at least a certain degree on trial-and-error for determining welding parameters. While the welding parameters may be informed by automatic parameter selection using physical characteristics of the welding task (e.g., workpiece material, workpiece thickness, wire diameter, wire type, gas type, etc.), adjustments to manually determined or recommended parameters may still be required, which can result in additional time, produce scrap, and/or require rework while correct parameters are identified.

Disclosed example systems and methods assist a collaborative robot welding system operator to quickly and easily arrive at a desired set of welding parameters. In disclosed examples, a collaborative robotic welding system includes an input device attached to the robotic manipulator. In some examples, the input device is a multi-directional input device, and may include one-to-six axes of input. A disclosed example input devices is a six-axis input device, sometimes referred to as a space mouse. By attaching the input device to the robotic manipulator, the user is able to intuitively adjust the welding parameters in real time while watching the welding operation to determine the effect. In some examples, the input device used to adjust the parameters during the welding operation is also used during teaching a robotic welding program, such as to make adjustments to positioning of the robotic manipulator.

In disclosed examples, the operator is provided with the ability to quickly and easily change the welding parameters during the welding operation to achieve the desired weld, instead of waiting to an end of a weld to adjust the parameters. In some examples, the adjustments made to the welding parameters via the input device are used to automatically modify the welding program at the conclusion of the weld or the welding program.

As used herein, welding-type power refers to power suitable for performing welding, cladding, plasma cutting, induction heating, laser (including laser welding and laser cladding), carbon arc cutting or gouging and/or welding wire preheating. As used herein, a welding-type power supply refers to any device capable of, when power is applied thereto, supplying welding, cladding, plasma cutting, induction heating, laser (including laser welding and laser cladding), carbon arc cutting or gouging and/or resistive wire preheating, including but not limited to transformer-rectifiers, inverters, converters, resonant power supplies, quasi-resonant power supplies, switch-mode power supplies, etc., as well as control circuitry and other ancillary circuitry associated therewith.

While examples systems and methods are disclosed herein with reference to robotic welding, this disclosure is not limited to welding systems. Disclosed systems and methods may be modified or adapted to a robotic system, including collaborative robotic systems, for performing any type of welding-type processes, such as welding, cladding, plasma cutting, induction heating, laser (including laser welding and laser cladding), carbon arc cutting or gouging and/or welding wire preheating.

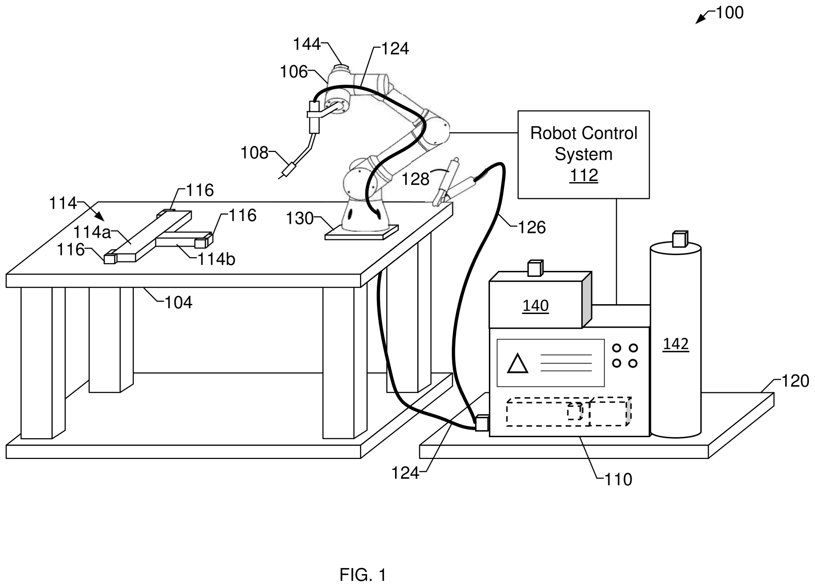

FIG. 1 illustrates an example robotic welding system 100 to perform welding. The example robotic welding system 100 of FIG. 1 includes a welding table 104, a robotic manipulator 106 configured to manipulate a welding torch 108, a welding-type power supply 110, and a robot control system 112.

The welding table 104, robotic manipulator 106, the welding torch 108, the welding-type power supply 110, and/or the robot control system 112, and/or subgroups of these components, may be packaged together (e.g., pre-assembled, pre-calibrated) to provide rapid setup of the robotic welding system 100 for welding at the end-user location. The robotic welding system 100 may be used to make repetitive welds, to leverage the consistency and repeatability advantages of the robotic manipulator 106. In the example of FIG. 1, the robotic manipulator 106 and/or the robot control system 112 are configured as a collaborative robot, which provides features that make the robotic manipulator 106 more conducive to working in areas in which people are proximate the robotic welding system 100.

In the example of FIG. 1, a workpiece 114 is positioned on the welding table 104. The workpiece 114 may include multiple components 114a, 114b which are to be welded together at one or more joints. To provide consistency in arrangement of the workpiece components 114a, 114b, the robotic welding system 100 may further include fixtures 116 attached to the welding table 104. The fixtures 116 may guide the placement of the components 114a, 114b, which can be used to consistently place the multiple components 114a, 114b.

During a welding operation or welding procedure, the robotic welding system 100 manipulates the welding torch 108, such as the illustrated welding torch, to which power is delivered by the welding-type power supply 110 via a first conductor 124 and returned by way of a work cable 126 and a work clamp 128 coupled to the weld table 104. The welding equipment may further include, for example, a source of shielding gas 142, a wire feeder 140, and other accessories and/or equipment. Other accessories and/or equipment may include, for example, water coolers, fume extraction devices, one or more controllers, sensors, user interfaces, and/or communication devices (wired and/or wireless).

The example robotic welding system 100 is configured to form a weld using any known electric welding techniques. Example electric welding techniques include shielded metal arc welding (SMAW), MIG, flux-cored arc welding (FCAW), TIG, laser welding, sub-arc welding (SAW), stud welding, friction stir welding, and resistance welding. In some examples, the welding-type power supply 110 and/or other welding equipment are configured to support one or more, but fewer than all, types of welding processes. To change welding processes, the welding-type power supply 110, torch 108, and/or other welding equipment may be removed (e.g., disconnected and moved away from the robotic welding system 100) and replaced by a different welding-type power supply, torch, and/or other welding equipment that supports the desired welding process. To facilitate ease of movement, the example welding equipment may be mounted or attached to a cart 120 or other conveyance (e.g., ground conveyance, hanging conveyance, etc.). Additionally or alternatively, multiple different types of welding equipment (e.g., multiple power supplies having different capabilities, multiple torches, etc.) may be co-located (e.g., proximate to a same robotic manipulator 106, on a rack of equipment, etc.) to enable rapid reconfiguration of the robotic welding system 100.

The example robotic manipulator 106 may operate using any number of degrees of freedom to manipulate the welding torch 108. For example, the robotic manipulator 106 may include multiple joints, in which each joint has one or more degrees of freedom, to achieve multiple orientations for accessing one or more weld joints on the workpiece 114. Whereas conventional welding robots are contained within a weld cell that is protected against intrusion by operators during robot operations (e.g., welding operations and/or other movement by the robot), in some examples the robotic welding system 100 is configured as a cobot, has a controller or processor, as well as one or more sensors, that are configured to operate in a manner such that humans do not necessarily need to be excluded from the area in which the robotic manipulator 106 is operating. For example, the robotic manipulator 106 may rapidly detect and respond to collisions, may operate with reduced speed and/or joint torque relative to conventional welding robots, and/or implement other features.

The robotic manipulator 106 is coupled to the table 104 via a base 130. Once secured, the base 130 is fixed with respect to the table 104, and may serve as a reference for position and/or orientation for the robotic manipulator 106.

The example robotic manipulator 106 and/or the example robot control system 112 are configured to transmit commands, requests, data, and/or other messages and/or communications to the power supply 110 via one or more protocols. The robotic manipulator 106 and/or the robot control system 112 are further configured to receive responses, acknowledgments, data, and/or other messages and/or communications from the power supply 110 via the one or more protocols. Based on a robotic welding procedure, the robotic manipulator 106 and/or the robot control system 112 may communicate parameters to the power supply 110 for configuration according to the robotic welding procedure, and/or adjust the welding-type process based on the variables and/or other data obtained from the power supply 110 while performing welding operations. In addition to communication with the power supply 110, the robotic manipulator 106, and/or the robot control system 112, the power supply 110, the robotic manipulator 106, and/or the robot control system 112 may communicate with other welding equipment (e.g., a welding accessory, such as the wire feeder 140, a shielding gas supply valve, a welding wire preheating system, a fume extraction system) and/or other robotic equipment.

The example robotic welding system 100 of FIG. 1 further includes a user input device 144. The user input device 144 is coupled (e.g., attached, mounted, integrated) to the robotic manipulator 106. For example, the user input device 144 may be coupled to the J5 or J6 joints of a through-arm type of robotic manipulator. The example user input device 144 is a six-axis joystick, also referred to as a space mouse, which has three degrees of linear input and three degrees of rotational input. In other examples, the user input device 144 may be implemented using an input device having at least two axes of input. For each axis of input, the user input device 144 permits the user to manipulate the user input device 144 in at least two directions (e.g., +/- translation for linear inputs, +/- tilting or rotation for rotational inputs).

During a teaching mode (e.g., programming positions and/or orientations of the robotic manipulator 106 and/or the welding torch 108 to generate a weld program while the welding-type power source is not outputting the welding-type power to the welding-type torch), inputs received via the user input device 144 may be used by the robot control system 112 to control motion of the robotic manipulator 106, such as for fine or low speed motions. During an operational mode (e.g., performing a robotic welding program), the robot control system 112 adjusts one or more parameters of a welding-type output from the welding-type power supply 110 and/or the wire feeder 140 in response to inputs to the user input device 144. The user input device 144 may be communicatively coupled to the robot control system 112 and/or the power supply 110 via a wired or wireless connection.

The example user input device 144 (and/or, more generally, the robot control system 112, the power supply 110, and/or the robotic welding system 100) may be converted between the teaching mode and the operational mode using a switch input 146. The example switch input 146 is a hardware switch positioned on the robotic manipulator 106. However, in other examples, the switch input 146 may be any type of hardware or software switching device, and may be coupled to the robotic manipulator 106, another component of the robotic welding system 100, and/or implemented in another user interface.

Example parameters of the welding-type output that may be adjusted in response to inputs to the user input device 144 may include voltage, current, wire feed speed, pulse frequency, peak pulse voltage, peak pulse current, pulse ramp rate, background pulse voltage, background pulse current, and/or any other direct parameters. Additionally or alternatively, inputs to the user input device 144 may be used to adjust qualitative parameters (e.g., result-based parameters), such as heat or energy input, arc control (e.g., harder or softer arc), penetration, weld size (e.g., bead size), weave width, and/or any other parameters describing a result of adjusting one or more direct parameters. In still other examples, the robot control system 112 may respond to inputs to the user input device 144 by synergically adjusting two or more parameters (e.g., voltage and wire feed speed, frequency and current, etc.) and/or by simultaneously adjusting two or more parameters in response to simultaneous inputs via two or more axes of the user input device 144.

The example user input device 144 may adjust parameters by an incremental amount per unit of movement of the user input device 144. For example, if the user input device 144 permits unlimited rotation about an axis, a given unit of rotation may correspond to an incremental unit of the parameter. In some examples, the user input device 144 may include detents to demarcate a unit of rotation, and/or the incremental unit that corresponds to the unit of rotation is user-configurable. For linear directions and/or tilting movements that do not allow for unlimited movement, an incremental unit of adjustment of a corresponding parameter may correspond to, or be based on, a unit of time and/or a degree of movement in the linear or rotational direction. For example, a parameter may be adjusted by a given increment per second that a corresponding linear or tilting input to the user input device 144 is present. The adjustment increment may be based on a degree of the input, such as by increasing the increment as the directional input or tilting input is increased (e.g., farther from a neutral position of the user input device 144).

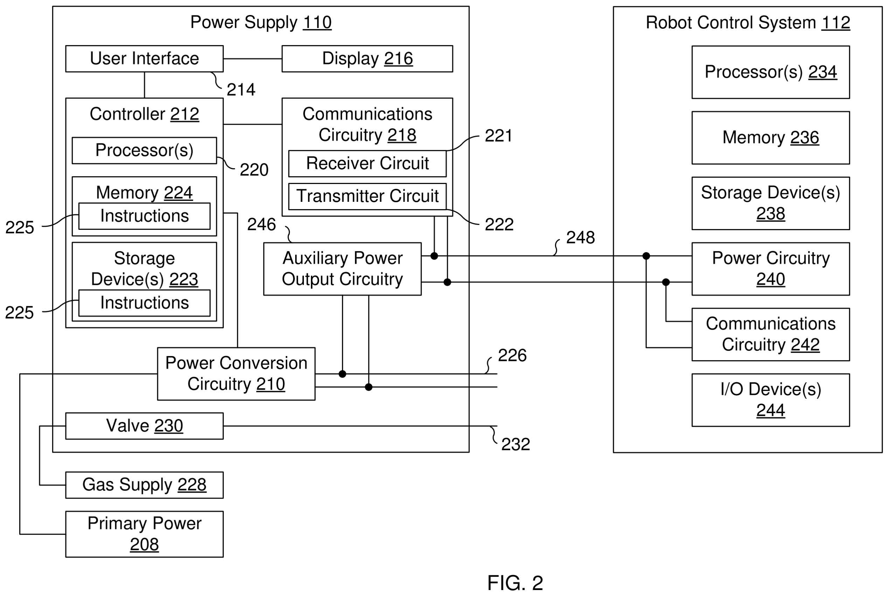

FIG. 2 is a block diagram of an example implementation of the welding-type power supply 110 and the robot control system 112 of FIG. 1. The example welding-type power supply 110 powers, controls, and supplies consumables to a welding application. In some examples, the welding-type power supply 110 directly supplies input power to the welding torch 108. In the illustrated example, the welding-type power supply 110 is configured to supply power to welding operations and/or preheating operations. The example welding-type power supply 110 may also provide power to a wire feeder to supply electrode wire to the welding torch 108 for various welding applications (e.g., GMAW welding, flux core arc welding (FCAW)).

The welding-type power supply 110 receives primary power 208 (e.g., from the AC power grid, an engine/generator set, a battery, or other energy generating or storage devices, or a combination thereof), conditions the primary power, and provides an output power to one or more welding devices and/or preheating devices in accordance with demands of the system. The primary power 208 may be supplied from an offsite location (e.g., the primary power may originate from the power grid). The welding-type power supply 110 includes a power conversion circuitry 210, which may include transformers, rectifiers, switches, and so forth, capable of converting the AC input power to AC and/or DC output power as dictated by the demands of the system (e.g., particular welding processes and regimes). The power conversion circuitry 210 converts input power (e.g., the primary power 208) to welding-type power based on a weld voltage setpoint and outputs the welding-type power via a weld circuit.

In some examples, the power conversion circuitry 210 is configured to convert the primary power 208 to both welding-type power and auxiliary power outputs. However, in other examples, the power conversion circuitry 210 is adapted to convert primary power only to a weld power output, and a separate auxiliary converter is provided to convert primary power to auxiliary power. In some other examples, the welding-type power supply 110 receives a converted auxiliary power output directly from a wall outlet. Any suitable power conversion system or mechanism may be employed by the welding-type power supply 110 to generate and supply both weld and auxiliary power.

The welding-type power supply 110 includes a controller 212 to control the operation of the welding-type power supply 110. The welding-type power supply 110 also includes a user interface 214. The controller 212 receives input from the user interface 214, through which a user may choose a process and/or input desired parameters (e.g., voltages, currents, particular pulsed or non-pulsed welding regimes, and so forth). The user interface 214 may receive inputs using any input device, such as via a keypad, keyboard, buttons, touch screen, voice activation system, wireless device, etc. Furthermore, the controller 212 controls operating parameters based on input by the user as well as based on other current operating parameters. Specifically, the user interface 214 may include a display 216 for presenting, showing, or indicating, information to an operator. The controller 212 may also include interface circuitry for communicating data to other devices in the system, such as the wire feeder, the robotic manipulator 106, and/or the robot control system 112. For example, in some situations, welding-type power supply 110 wirelessly communicates with other welding devices within the welding system. Further, in some situations, the welding-type power supply 110 communicates with other welding devices using a wired connection, such as by using a network interface controller (NIC) to communicate data via a network (e.g., ETHERNET, 10baseT, 10base100, etc.).

The controller 212 includes control circuitry such as a processor 220 or other logic circuitry, which controls the operations of the welding-type power supply 110. The controller 212 receives and processes multiple inputs associated with the performance and demands of the system. The processor 220 may include one or more microprocessors, such as one or more "general-purpose" microprocessors, one or more special-purpose microprocessors and/or ASICS, and/or any other type of processing device. For example, the processor 220 may include one or more digital signal processors (DSPs).

The example controller 212 includes one or more storage device(s) 223 and one or more memory device(s) 224. The storage device(s) 223 (e.g., nonvolatile storage) may include ROM, flash memory, a hard drive, and/or any other suitable optical, magnetic, and/or solid-state storage medium, and/or a combination thereof. The storage device 223 stores data (e.g., data corresponding to a welding application), instructions (e.g., software or firmware to perform welding processes), and/or any other appropriate data. Examples of stored data for a welding application include an attitude (e.g., orientation) of a welding torch, a distance between the contact tip and a workpiece, a voltage, a current, welding device settings, and so forth.

The memory device 224 may include a volatile memory, such as random access memory (RAM), and/or a nonvolatile memory, such as read-only memory (ROM). The memory device 224 and/or the storage device(s) 223 may store a variety of information and may be used for various purposes. For example, the memory device 224 and/or the storage device(s) 223 may store processor executable instructions 225 (e.g., firmware or software) for the processor 220 to execute. In addition, one or more control regimes for various welding processes, along with associated settings and parameters, may be stored in the storage device 223 and/or memory device 224, along with code configured to provide a specific output (e.g., initiate wire feed, enable gas flow, capture welding current data, detect short circuit parameters, determine amount of spatter) during operation.

In some examples, the welding power flows from the power conversion circuitry 210 through a weld cable 226. The example weld cable 226 is attachable and detachable from weld studs at each of the welding-type power supply 110 (e.g., to enable ease of replacement of the weld cable 226 in case of wear or damage). Furthermore, in some examples, welding data is provided with the weld cable 226 such that welding power and weld data are provided and transmitted together over the weld cable 226.

In some examples, the welding-type power supply 110 includes or is implemented in a wire feeder.

The example communications circuitry 218 includes a receiver circuit 221 and a transmitter circuit 222. Generally, the receiver circuit 221 receives data transmitted by the robotic manipulator 106 and/or the robot control system 112, and the transmitter circuit 222 transmits data to the robotic manipulator 106 and/or the robot control system 112.

In some examples, a gas supply 228 provides shielding gases, such as argon, helium, carbon dioxide, and so forth, depending upon the welding application. The shielding gas flows to a valve 230, which controls the flow of gas, and if desired, may be selected to allow for modulating or regulating the amount of gas supplied to a welding application. The valve 230 may be opened, closed, or otherwise operated by the controller 212 to enable, inhibit, or control gas flow (e.g., shielding gas) through the valve 230. Shielding gas exits the valve 230 and flows through a gas line 232 (which in some implementations may be packaged with the welding power output) to the wire feeder which provides the shielding gas to the welding application. In some examples, the welding-type power supply 110 does not include the gas supply 228, the valve 230, and/or the gas line 232.

The example robot control system 112 of FIG. 2 includes processor(s) 234, memory 236, one or more storage device(s) 238, power circuitry 240, communications circuitry 242, and one or more I/O device(s) 244.

The example processor(s) 234 execute instructions to configure and/or program a robotic welding procedure, and/or generates commands to execute a robotic welding procedure via the robotic manipulator 106. The processor(s) 234 may include one or more microprocessors, such as one or more "general-purpose" microprocessors, one or more special-purpose microprocessors and/or ASICS, and/or any other type of processing device. For example, the processor(s) 234 may include one or more digital signal processors (DSPs). The memory device 236 may include a volatile memory, such as random access memory (RAM), and/or a nonvolatile memory, such as read-only memory (ROM). The memory device 236 and/or the storage device(s) 238 may store a variety of information and may be used for various purposes. For example, the memory device 236 and/or the storage device(s) 238 may store processor executable instructions (e.g., firmware or software) for the processor(s) 234 to execute. In addition, one or more control regimes for various robotic manipulators and/or robotic welding procedures, along with associated settings and parameters, may be stored in the storage device(s) 238 and/or memory device 236. The storage device(s) 238 (e.g., nonvolatile storage) may include ROM, flash memory, a hard drive, and/or any other suitable optical, magnetic, and/or solid-state storage medium, and/or a combination thereof. The storage device(s) 238 store data (e.g., data corresponding to a welding application), instructions (e.g., software or firmware to perform welding processes), and/or any other appropriate data.

The power circuitry 240 converts input power to power usable by the robot control system 112 (e.g., by the processor(s) 234, the memory 236, the storage device(s) 238, communications circuitry 242, the I/O device(s) 244, and/or the robotic manipulator 106). In the example of FIG. 2, the robot control system 112 is plugged into welding-type power supply 110 to provide operational power to the robot control system 112 and/or the robotic manipulator 106. In the illustrated example, the power supply 110 includes auxiliary power output circuitry 246, which converts input power (e.g., output power from the power conversion circuitry 210, primary power 208) to auxiliary power, such as a standard AC output (e.g., 120VAC or 240VAC at 50Hz or 60Hz). In such examples, the robot control system 112 can be plugged into the power supply 110 instead of mains power, and receives the auxiliary power via an auxiliary power connection (e.g., auxiliary power conductors 248 such as an AC power cord).

The example communications circuitry 218 and the communications circuitry 242 of FIG. 2 are configured to communicate via the auxiliary power connection. In examples in which the auxiliary power conductors 248 are configured to transmit 120VAC power (or other high-voltage AC power), the communications circuitry 218 and the communications circuitry 242 may be configured to comply with the IEEE Standard 1901-2010 and/or any other power line communication standard or technique compatible with high-speed communication over the auxiliary power connection.

The I/O device(s) 244 may include operator or user interfaces and/or other data interfaces. Example I/O device(s) 244 may include a keyboard, a keypad, a mouse, a trackball, a pointing device, a microphone, an audio speaker, a display device, an optical media drive, a multi-touch touch screen, a gesture recognition interface, a magnetic media drive, and/or any other operator interface devices to enable an operator to view information about the robot control system 112, the robotic manipulator 106, a robotic welding procedure, the connected power supply 110 and/or any other connected welding equipment, and/or any other information. For example, the I/O device(s) 244 may include input and/or output device(s) to control movement of the robotic manipulator 106, such as a teach pendant (e.g., a computing device executing software allowing the user to configure robotic welding procedures, welding parameters, and/or any other aspects of the robotic welding system 100), the example user input device 144, and/or dedicated programming devices positioned on the robotic manipulator 106 for use while guiding the robotic manipulator 106 in free drive mode. In other examples, the communications circuitry 242 may also include a communication interface to communicate with and control the robotic manipulator 106.

The power supply 110 may be connected to the example robot control system 112 by plugging the robot control system 112 into the power supply 110 via the auxiliary power connection (e.g., a 120VAC outlet on the power supply). While the power supply 110 is outputting the auxiliary output power and after the robot control system 112 is powered on and initialized, the power supply 110 and the robot control system 112 may automatically pair by communicating via the auxiliary power connection. To perform the pairing, the power supply 110 detects, via the communications circuitry 218, that the robot control system is coupled to the auxiliary power connection. For example, the communications circuitry 218 (and/or the communications circuitry 242) outputs messages via the auxiliary power connection, which are received and/or acknowledged by the communications circuitry 242 (or the communications circuitry 218).

In response to detecting the robot control system 112 via the auxiliary power connection and receiving communications from the robot control system 112, the controller 212 configures the welding-type power supply 110. For example, upon establishing communication between the robot control system 112 and the power supply 110, the power supply 110 may transmit to the robot control system 112 information that can be used to configure the power supply 110. The robot control system 112 can then provide commands to the power supply 110 to configure the power supply 110 to perform the desired welding processes as part of a robotic welding procedure.

Example information that may be automatically transmitted to the robot control system 112 by the power supply 110 may include an: identifier of a paired welding-type power supply (e.g., a serial number, an assigned name, etc.), an identification of capabilities of a paired welding-type power supply (e.g., a listing of features and/or modifiable parameters, a model number, etc.), software instructions to facilitate control of the welding-type power supply 110 by the robot control system 112 (e.g., a software application or plug-in, software updates, software routines, an API, etc.), identification of a welding capability of the welding-type power supply (e.g., a listing of available welding processes), identification of an adjustable parameter of the welding-type power supply (e.g., parameters that are typically used by an operator, parameters that are modifiable by typically hidden from the operator, robotic welding-specific parameters, etc.) identification of a parameter limitation of the welding-type power supply (e.g., voltage limits, current limits, power limits, wire feed speed limits, frequency limits, etc.), a robotic welding procedure and/or welding-type parameters to perform the robotic welding procedure (e.g., a stored, predefined set of instructions to be implemented by the robot control system 112 to perform a robotic welding procedure), and/or any other information that may be transferred between the power supply 110 and the robot control system 112. Additionally or alternatively, the welding-type power supply 110 may transmit one or more available real-time process data streams, such as welding current measurements, output voltage measurements, wire feed speed measurements. The robot control system 112 may use real-time process data streams for other aspects of the robotic welding procedure, such as process control, seam tracking, and/or any other control.

Additionally or alternatively, the welding-type power supply 110 may transmit information about physical system needs, such as the need for physical isolation or other physical configuration to be performed by the operator, to the robot control system 112. Based on the physical configuration information, the robot control system 112 may display the physical information to an operator via a display or otherwise notify the operator of the physical requirements. Additionally or alternatively, the welding-type power supply 110 may transmit system status information about one or more components of the welding system, for display by the robot control system 112 or other action. Example welding equipment system status information may include internal temperature measurements, airflow measurements, coolant circulation information, error codes and/or other diagnostic information, and/or any other status information.

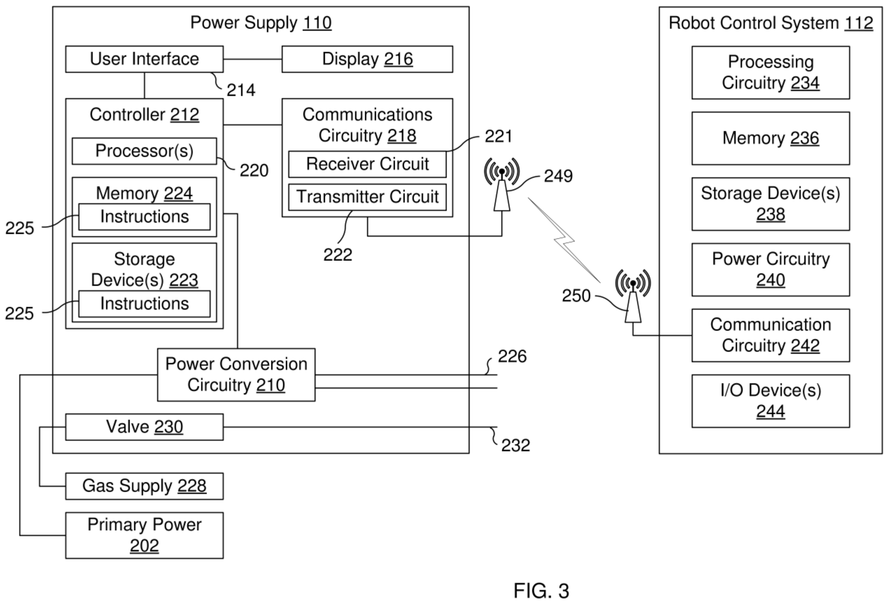

FIG. 3 is a block diagram of another example implementation of the welding-type power supply 110 and the robot control system 112 of FIG. 1. The example power supply 110 of FIG. 3 includes the components of the example power supply 110 of FIG. 2, but may include or omit the auxiliary power output circuitry 246. The example robot control system 112 of FIG. 3 includes the components of the robot control system 112 of FIG. 2.

In contrast with the power line communication of FIG. 2, the example welding-type power supply 110 and the robot control system 112 of FIG. 3 communicate via wireless communications. To this end, the example communications circuitry 218 and communications circuitry 242 are connected to respective antennas 249, 250.

While establishment of communications may occur automatically using power line communications as in FIG. 2, the example robot control system 112 and/or the power supply 110 may require initiation of pairing by the operator (e.g., via the user interface 214 and the I/O device(s) 244) to establish communication between the robot control system 112 and/or the power supply 110. For example, the operator may select a "Pair" button on each of the user interface 214 of the power supply 110 and a user interface of the robot control system 112, which then causes the communications circuitry 218 and the communications circuitry 242 to perform a pairing procedure. Upon establishing the communications channel via pairing, the power supply 110 and the robot control system 112 automatically exchange information and/or configure the power supply 110 as discussed above. In some examples, the operator may further be prompted to verify the pairing occurred between the desired welding-type power supply 110 and robot control system 112 (e.g., neither the power supply 110 nor the robot control system 112 paired with an unintended device nearby).

While example powerline and wireless communications are disclosed above, the example robot control system 112 and the power supply 110 may be coupled using any communications method, including conventional methods such as a control cable.

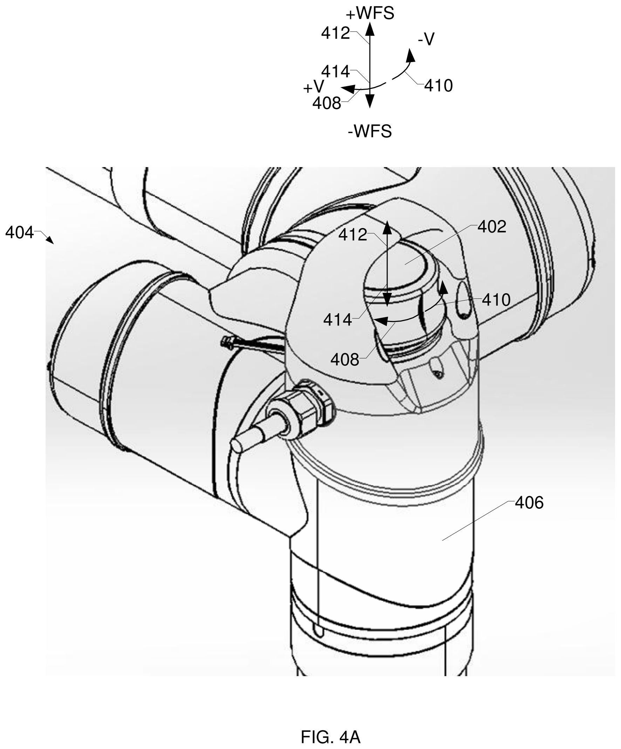

FIGS. 4A-4B illustrate an example collaborative robot including an example input device 402 attached to the collaborative robot (e.g., a robotic manipulator 404, such as the robotic manipulator 106 of FIG. 1) to adjust welding parameters. The example input device 402 of FIGS. 4A-4B has two or more axes, such as a six-axis space mouse, and is attached to or integrated with one or more joints 406 of the robotic manipulator 404. The input device 402 is in communication with control circuitry, such as the controller 212 and/or the processor 220 of the power supply 110 (e.g., via the communications circuitry 218) of FIGS. 2 and/or 3, and/or the processor(s) 234 of the robot control system 112 (e.g., via the communications circuitry 242 and/or the I/O device(s) 244). In the examples described below, the processor(s) 234 of the robot control system 112 responds to inputs received at the input device 402 by controlling the power supply 110, the wire feeder 140, and/or other equipment to adjust parameters. However, the control may be performed by other controllers, processors, and/or other control circuitry.

In the example of FIG. 4A, the input device 402 may receive inputs to control two parameters, such as voltage and wire feed speed, via two axes of the input device 402. The processor(s) 234 adjust the first parameter (e.g., voltage) based on a first input to the input device 402, such as rotation of the input device 402 about a first rotational axis. Rotation in a first direction 408 causes the processor(s) 234 to increase the voltage output by the power supply 110, and rotation in a second direction 410 (about the same axis as the first direction 408) causes the processor(s) 234 to decrease the voltage output by the power supply 110. Translation in a third direction 412 causes the processor(s) 234 to increase the wire feed speed output by the wire feeder 140 and translation in a fourth direction 414 causes the processor(s) 234 to decrease the wire feed speed output by the wire feeder 140.

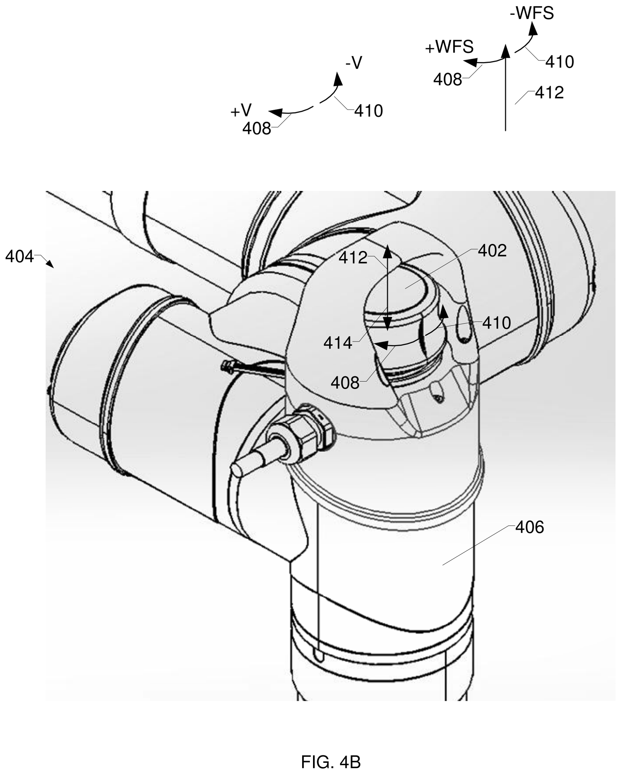

In some examples, the processor(s) 234 are configured to respond to inputs to the input device 402 in a first direction or about a first axis simultaneously with inputs in a second direction or about a second axis. For example, the processor(s) 234 may be configured to adjust a first parameter (e.g., voltage) in response to rotation of the input device 402 in the first direction 408 and the second direction 410. Additionally, the processor(s) 234 are further configured to adjust a second parameter in response to translating the input device 402 in the third direction 412, the fourth direction 414, or either, simultaneously with rotating the input device 402 in the first direction 408 or the second direction 410. For example, as illustrated in FIG. 4B, the user may adjust wire feed speed by translating the input device 402 in the third direction 412, followed by rotating the input device 402 in the first direction 408 or the second direction 410.

In some examples, the robot control system 112 adjusts two or more parameters simultaneously in response to simultaneous inputs to the user input device 144. For example, the processor(s) 234 may be configured to synergically adjust two or more parameters in response to inputs in one translational or rotational direction, and/or in response to an inputs in a first direction or about a first axis simultaneously with an input in a second direction or about a second axis. For example, the processor(s) 234 may use a predetermined relationship between two or more parameters, such as voltage and wire feed speed, to control the two or more parameters in response to the one or more inputs.

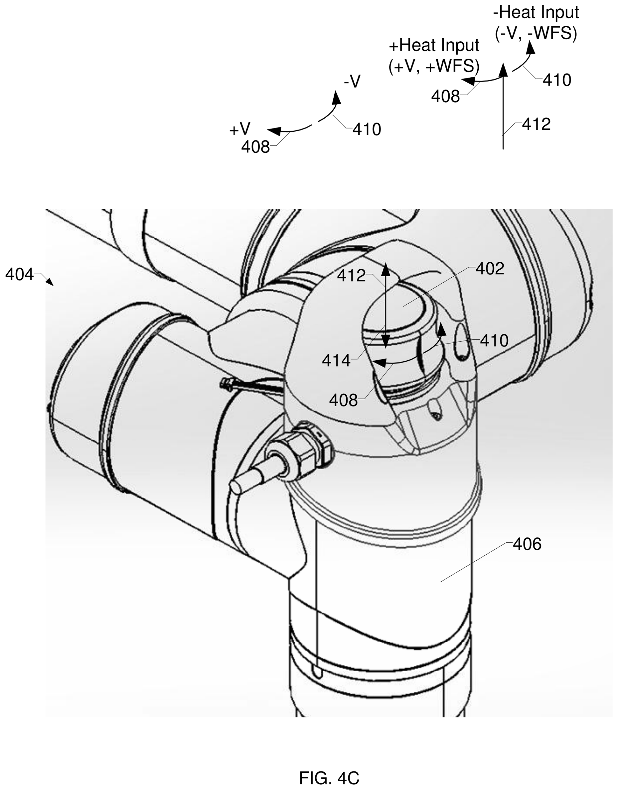

In the example of FIG. 4C, the processor(s) 234 adjust a first parameter (e.g., voltage) in response to rotation of the input device 402 in the first direction 408 and the second direction 410. Additionally, the processor(s) 234 are further configured to adjust a result parameter, such as heat input, according to a predetermined relationship (e.g., a synergic relationship) between multiple parameters. In the example of FIG. 4C, the processor(s) 234 simultaneously adjusts voltage and wire feed speed parameters in response to translating the input device 402 in the third direction 412, the fourth direction 414, or either, simultaneously with rotating the input device 402 in the first direction 408 or the second direction 410. For example, the user may adjust a heat input parameter, involving increasing or decreasing both voltage and wire feed speed according to a predetermined relationship, by translating the input device 402 in the third direction 412, followed by rotating the input device 402 in the first direction 408 or the second direction 410.

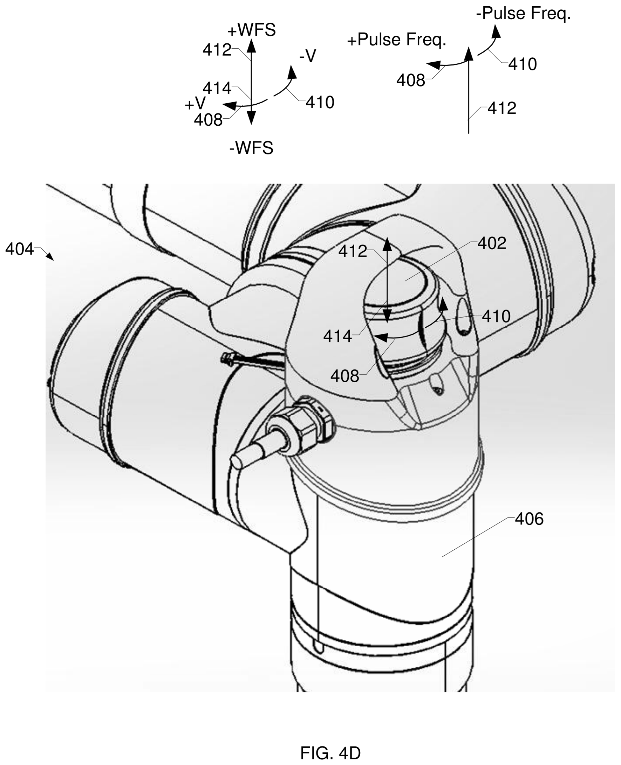

In still other examples, the robot control system 112 adjusts some individual parameters in response to inputs along corresponding individual linear or rotational axes, and adjusts other parameters in response to combinations of inputs along multiple linear and/or rotational axes. In the example of FIG. 4D, the processor(s) 234 adjust the voltage in response to rotation in the first and second directions 408, 410, and adjust the wire feed speed in response to translation in the third and fourth directions 412, 414, in a similar manner as described above with reference to FIG. 4A.

Additionally, in response to a combination of an input in the first direction 408 or the second direction 410 and an input in the third direction 412 or the fourth direction 414, the processor(s) 234 adjust a different parameter, such as arc control (e.g., inductance) or pulse frequency.

While the examples above are disclosed with reference to one or two directions and/or axes, or a combination of two directions and/or axes, the foregoing examples may be modified to use any number of the available input directions and/or available input axes, and/or any combination of two or more available input directions and/or available input axes. Additionally, while the examples above are disclosed with reference to example parameters, any desired parameters may be assigned to available input directions and/or available input axes, and/or combinations of available input directions and/or available input axes. In some examples, the individual input directions and/or input axes, and/or combinations of the input directions and/or input axes, are user-configurable to correspond to any desired user-modifiable parameters.

In some examples, multiple configurations of individual directions and/or axes and/or combinations of directions and/or axes with corresponding parameter adjustments may be programmed. The different configurations of inputs and parameters may be assigned to individual users as preferences, assigned to different robotic welding systems 100 or robot control systems 112 based on the type of welding being performed, and/or toggled between using an alt-key or similar toggle input.

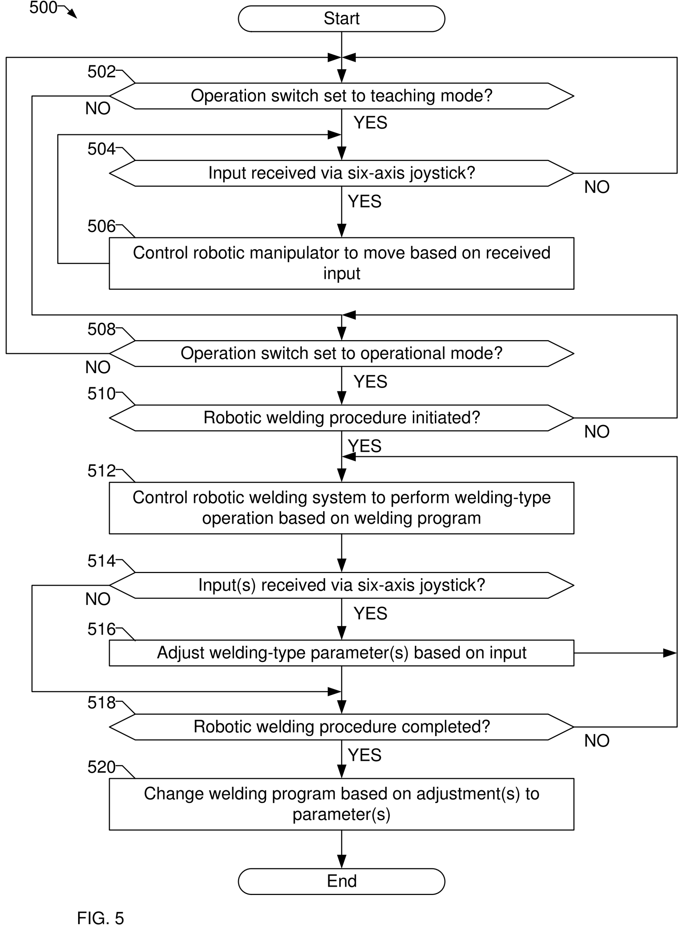

FIG. 5 is a flowchart representative of example machine readable instructions 500 which may be executed by the example robot control system 112 of FIGS. 1, 2, and/or 3 to control the robotic welding system 100 including adjusting welding parameters during a welding operation. The example instructions 500 are described below with reference to the processor(s) 234 of FIG. 2, in which the user input device 144 is a six-axis joystick, or space mouse.

At block 502, the processor(s) 234 determine whether an operation switch (e.g., the switch input) is set to a teaching mode. If operation switch is set to the teaching mode (block 502), at block 504 the processor(s) 234 determines whether an input has been received via the six-axis joystick (e.g., the user input device 144). If an input has been received via the six-axis joystick (block 504), at block 506 the processor(s) 234 control the robotic manipulator 106 to move based on the received input. Control then returns to block 504 to await further inputs via the six-axis joystick.

If an input has not been received via the six-axis joystick (block 504), at block 508 the processor(s) 234 determine whether an operation switch (e.g., the switch input 146) is set to an operational mode. In some examples, the robot control system 112 disables the welding-type power supply 110 from outputting welding-type power while the switch input 146 is in not in the operational mode (e.g., while the switch input 146 is in the teaching mode). If the operation switch is set to an operational mode (block 508), at block 510 the processor(s) 234 determine whether a robotic welding procedure has been initiated. For example, the processor(s) 234 may determine whether an operator or other input has triggered a robotic welding program to begin.

If a robotic welding procedure has been initiated (block 510), at block 512 the processor(s) 234 control the robotic welding system to perform a welding-type operation based on a welding program. Example welding programs specify movements (or positions and/or orientations) of the robotic manipulator 106 and the welding torch 108, and parameters for the welding-type power output by the welding-type power supply 110.

At block 514, the processor(s) determine whether one or more inputs have been received via the six-axis joystick (e.g., the user input device 144). If input(s) have been received via the six-axis joystick (block 514), at block 516 the processor(s) 234 adjust one or more welding-type parameters based on the input. For example, the processor(s) 234 may adjust a first parameter (e.g., voltage) based on a first input (e.g., a first direction or about a first axis) to the six-axis joystick, and adjust a second parameter (e.g., wire feed speed) based on a second input (e.g., a second direction or about a second axis) to the six-axis joystick. The input(s) may include a first input (e.g., in a first direction or about a first axis) received simultaneously with a second input (e.g., in the second direction or about a second axis). Simultaneous inputs may be used to control individual parameters, qualitative or result parameters, perform synergic control of multiple parameters, and/or provide any other desired input. After adjusting the parameters (block 516), control returns to block 512 to control the robotic welding system based on the adjusted parameters.

If input(s) have been received via the six-axis joystick (block 514), at block 518 the processor(s) 234 determine whether the robotic welding procedure is complete. If the robotic welding procedure is not complete (block 518), control returns to block 512 to continue controlling the robotic welding system 100 to perform the robotic welding program.

When the robotic welding procedure is complete (block 518), at block 520 the processor(s) 234 change the welding program based on the adjustment(s) made to the parameters (e.g., via the six-axis joystick). The processor(s) 234 then store the modified welding program to include the adjusted parameters, so that subsequent performances of the welding program use the adjusted parameters as configured by the operator using the six-axis joystick. The example instructions 500 then end.

As utilized herein the terms "circuits" and "circuitry" refer to physical electronic components (i.e. hardware) and any software and/or firmware (code) that may configure the hardware, be executed by the hardware, and/or otherwise be associated with the hardware. As used herein, for example, a particular processor and memory may comprise a first "circuit" when executing a first set of one or more lines of code and may comprise a second "circuit" when executing a second set of one or more lines of code. As utilized herein, "and/or" means any one or more of the items in the list joined by "and/or". As an example, "x and/or y" means any element of the three-element set {(x), (y), (x, y)}. In other words, "x and/or y" means "one or both of x and y." As another example, "x, y, and/or z" means any element of the seven-element set {(x), (y), (z), (x, y), (x, z), (y, z), (x, y, z)}. In other words, "x, y, and/or z" means "one or more of x, y and z". As utilized herein, the term "exemplary" means serving as a non-limiting example, instance, or illustration. As utilized herein, the terms "e.g." and "for example" set off lists of one or more non-limiting examples, instances, or illustrations. As utilized herein, circuitry is "operable" to perform a function whenever the circuitry comprises the necessary hardware and code (if any is necessary) to perform the function, regardless of whether performance of the function is disabled or not enabled (e.g., by an operator-configurable setting, factory trim, etc.).

The present devices and/or methods may be realized in hardware, software, or a combination of hardware and software. The present methods and/or systems may be realized in a centralized fashion in at least one computing system, processors, control circuitry, and/or other logic circuits, or in a distributed fashion where different elements are spread across several interconnected computing systems, processors, and/or other logic circuits. Any kind of computing system or other apparatus adapted for carrying out the methods described herein is suited. A typical combination of hardware and software may be a processing system integrated into a welding power source with a program or other code that, when being loaded and executed, controls the welding power source such that it carries out the methods described herein. Another typical implementation may comprise an application specific integrated circuit or chip such as field programmable gate arrays (FPGAs), a programmable logic device (PLD) or complex programmable logic device (CPLD), and/or a system-on-a-chip (SoC). Some implementations may comprise a non-transitory machine-readable (e.g., computer readable) medium (e.g., FLASH memory, optical disk, magnetic storage disk, or the like) having stored thereon one or more lines of code executable by a machine, thereby causing the machine to perform processes as described herein. As used herein, the term "non-transitory machine readable medium" is defined to include all types of machine readable storage media and to exclude propagating signals.

An example control circuit implementation may be a microcontroller, a field programmable logic circuit and/or any other control or logic circuit capable of executing instructions that executes weld control software. The control circuit could also be implemented in analog circuits and/or a combination of digital and analog circuitry.

While the present method and/or system has been described with reference to certain implementations, it will be understood by those skilled in the art that various changes may be made and equivalents may be substituted without departing from the scope of the present method and/or system. In addition, many modifications may be made to adapt a particular situation or material to the teachings of the present disclosure without departing from its scope. For example, block and/or components of disclosed examples may be combined, divided, re-arranged, and/or otherwise modified. Therefore, the present method and/or system are not limited to the particular implementations disclosed. Instead, the present method and/or system will include all implementations falling within the scope of the appended claims, both literally and under the doctrine of equivalents.
Certain embodiments of the invention are described in the following clauses:
Clause 1. A robotic welding system, comprising:
   a robotic manipulator configured to move a welding-type torch according to a robotic welding program;
   a welding-type power source configured to supply welding-type power to the welding-type torch;
   an input device coupled to the robotic manipulator; and
   control circuitry configured to:
      control the welding-type power source to output the welding-type power to the welding-type torch according to one or more parameters during a welding-type operation;
      in response to receiving an input via the input device while the welding-type power source is outputting the welding-type power, adjust at least one of the one or more parameters based on the input; and
      control the welding-type power source to output the welding-type power to the welding-type torch based on the adjustment to the one or more parameters.
Clause 2. The robotic welding system as defined in clause 1, wherein the input device comprises a user input device having at least two axes of input.
Clause 3. The robotic welding system as defined in clause 1, wherein the input device comprises a six-axis joystick.
Clause 4. The robotic welding system as defined in clause 1, wherein the control circuitry is configured to adjust a first parameter based on a first input to the input device and adjust a second parameter based on a second input to the input device.
Clause 5. The robotic welding system as defined in clause 4, wherein the first input comprises manipulation of the input device in a first direction or about a first axis, and the second input comprises manipulation of the input device in a second direction or about a second axis.
Clause 6. The robotic welding system as defined in clause 5, wherein the input device is configured to permit an input in the first direction or about the first axis simultaneously with an input in the second direction or about the second axis.
Clause 7. The robotic welding system as defined in clause 6, wherein the control circuitry is configured to adjust the first parameter and the second parameter simultaneously in response to the input in the first direction or about the first axis simultaneously with the input in the second direction or about the second axis.
Clause 8. The robotic welding system as defined in clause 6, wherein the control circuitry is configured to adjust a third parameter simultaneously in response to the input in the first direction or about the first axis simultaneously with the input in the second direction or about the second axis.
Clause 9. The robotic welding system as defined in clause 5, wherein the control circuitry is configured to adjust the first parameter by an incremental amount per unit of movement of the input device in the first direction or about the first axis.
Clause 10. The robotic welding system as defined in clause 9, wherein the incremental amount is user-adjustable.
Clause 11. The robotic welding system as defined in clause 1, wherein the control circuitry is configured to change values for the one or more parameters stored in association with the robotic welding program based on changes to the one or more parameters via the input device.
Clause 12. The robotic welding system as defined in clause 1, wherein the control circuitry is configured to, while the welding-type power source is not outputting the welding-type power to the welding-type torch, control movement of the robotic manipulator in response to receiving an input via the input device.
Clause 13. The robotic welding system as defined in clause 12, further comprising a switching input, wherein the control circuitry is configured to respond to receiving inputs via the input device by adjusting the one or more parameters or controlling movement of the robotic manipulator based on a state of the switching input.
Clause 14. A welding control system, comprising:
   an input device configured to be coupled to a robotic manipulator; and
   control circuitry configured to:
      control a welding-type power source to output welding-type power according to one or more parameters during a welding-type operation;
      in response to receiving an input via the input device while controlling the welding-type power source to output the welding-type power, adjust at least one of the one or more parameters based on the input; and
      control the welding-type power source to output the welding-type power based on the adjustment to the one or more parameters.
Clause 15. The welding control system as defined in clause 14, wherein the control circuitry is configured to, while the welding-type power source is not outputting the welding-type power, control movement of the robotic manipulator in response to receiving an input via the input device.
Clause 16. The welding control system as defined in clause 15, further comprising a switching input, wherein the control circuitry is configured to respond to receiving inputs via the input device by adjusting the one or more parameters or controlling movement of the robotic manipulator based on a state of the switching input.
Clause 17. The welding control system as defined in clause 14, wherein the input device comprises a six-axis joystick.
Clause 18. The welding control system as defined in clause 14, wherein the control circuitry is configured to adjust a first parameter based on a first input to the input device and adjust a second parameter based on a second input to the input device.
Clause 19. The welding control system as defined in clause 18, wherein the first input comprises manipulation of the input device in a first direction or about a first axis, and the second input comprises manipulation of the input device in a second direction or about a second axis.
Clause 20. The welding control system as defined in clause 19, wherein the input device is configured to permit an input in the first direction or about the first axis simultaneously with an input in the second direction or about the second axis.

## Claims

1. A robotic welding system, comprising:
a robotic manipulator configured to move a welding-type torch according to a robotic welding program;
a welding-type power source configured to supply welding-type power to the welding-type torch;
an input device coupled to the robotic manipulator; and
control circuitry configured to:
control the welding-type power source to output the welding-type power to the welding-type torch according to one or more parameters during a welding-type operation;
in response to receiving an input via the input device while the welding-type power source is outputting the welding-type power, adjust at least one of the one or more parameters based on the input; and
control the welding-type power source to output the welding-type power to the welding-type torch based on the adjustment to the one or more parameters.

2. The robotic welding system as defined in claim 1, wherein the input device comprises a user input device having at least two axes of input or
wherein the input device comprises a six-axis joystick.

3. The robotic welding system as defined in claim 1, wherein the control circuitry is configured to adjust a first parameter based on a first input to the input device and adjust a second parameter based on a second input to the input device.

4. The robotic welding system as defined in claim 3, wherein the first input comprises manipulation of the input device in a first direction or about a first axis, and the second input comprises manipulation of the input device in a second direction or about a second axis.

5. The robotic welding system as defined in claim 4, wherein the input device is configured to permit an input in the first direction or about the first axis simultaneously with an input in the second direction or about the second axis.

6. The robotic welding system as defined in claim 5, wherein the control circuitry is configured to adjust the first parameter and the second parameter simultaneously in response to the input in the first direction or about the first axis simultaneously with the input in the second direction or about the second axis.

7. The robotic welding system as defined in claim 5, wherein the control circuitry is configured to adjust a third parameter simultaneously in response to the input in the first direction or about the first axis simultaneously with the input in the second direction or about the second axis.

8. The robotic welding system as defined in claim 4, wherein the control circuitry is configured to adjust the first parameter by an incremental amount per unit of movement of the input device in the first direction or about the first axis and optionally
wherein the incremental amount is user-adjustable.

9. The robotic welding system as defined in claim 1, wherein the control circuitry is configured to change values for the one or more parameters stored in association with the robotic welding program based on changes to the one or more parameters via the input device.

10. The robotic welding system as defined in claim 1, wherein the control circuitry is configured to, while the welding-type power source is not outputting the welding-type power to the welding-type torch, control movement of the robotic manipulator in response to receiving an input via the input device and optionally wherein
the robotic welding system further comprising a switching input, wherein the control circuitry is configured to respond to receiving inputs via the input device by adjusting the one or more parameters or controlling movement of the robotic manipulator based on a state of the switching input.

11. A welding control system, comprising:
an input device configured to be coupled to a robotic manipulator; and
control circuitry configured to:
control a welding-type power source to output welding-type power according to one or more parameters during a welding-type operation;
in response to receiving an input via the input device while controlling the welding-type power source to output the welding-type power, adjust at least one of the one or more parameters based on the input; and
control the welding-type power source to output the welding-type power based on the adjustment to the one or more parameters.

12. The welding control system as defined in claim 11, wherein the control circuitry is configured to, while the welding-type power source is not outputting the welding-type power, control movement of the robotic manipulator in response to receiving an input via the input device, and optionally wherein
the welding control system further comprising a switching input, wherein the control circuitry is configured to respond to receiving inputs via the input device by adjusting the one or more parameters or controlling movement of the robotic manipulator based on a state of the switching input.

13. The welding control system as defined in claim 11, wherein the input device comprises a six-axis joystick.

14. The welding control system as defined in claim 11, wherein the control circuitry is configured to adjust a first parameter based on a first input to the input device and adjust a second parameter based on a second input to the input device.

15. The welding control system as defined in claim 14, wherein the first input comprises manipulation of the input device in a first direction or about a first axis, and the second input comprises manipulation of the input device in a second direction or about a second axis and optionally wherein the input device is configured to permit an input in the first direction or about the first axis simultaneously with an input in the second direction or about the second axis.
